# EUROPEAN PATENT APPLICATION

(11) **EP 1 061 054 A1**
(43) Date of publication of application: **20.12.2000**
(21) Application number: 00304766.9
(22) Date of filing: 06.06.2000
(51) Int. Cl.: C03B 37/012

(54) **Method of making optical fiber by a rod-in tube process and fiber made by the method**

(30) Priority: 18.06.1999 US 336429
(71) Applicant: LUCENT TECHNOLOGIES INC., Murray Hill, New Jersey 07974-0636 (US)
(72) Inventor: Fleming, James William, Jr., Westfield, New Jersey 07090 (US); Macchesney, John Burnette, Lebanon, New Jersey 08833 (US); Wisk, Patrick William, Greenbrook, New Jersey 08812 (US); Yan, Man Fei, Berkeley Heights, New Jersey 07922 (US)
(74) Representative: Watts, Christopher Malcolm Kelway, Dr.

(57) **Abstract**

A hybrid method of making silica-based optical fiber comprises providing a VAD-produced core rod and collapsing a substrate tube comprising an MCVD-produced cladding onto the core rod. Optically inactive cladding material (of the substrate tube) provides the bulk of the optical fiber. The hybrid process takes advantage of VAD's ability to rapidly produce a core rod of substantial size, and also takes advantage of MCVD's ability to form in a substrate tube a deposit having relatively complex refractive index profile. The hybrid method can result in lower production cost.

## Description

### FIELD OF THE INVENTION

This invention pertains to methods of making silica-based optical fibers, and to silica-based optical fiber made by the method.

### BACKGROUND OF THE INVENTION

Silica-based optical fibers have reached a high state of development, with fiber characteristics such as low loss, a desired dispersion and/or dispersion slope, cut-off wavelength and highly precise geometry routinely achieved. However, there remains the challenge to produce the required high quality fibers at ever lower costs.

The bulk of silica-based optical fiber is produced by one of two methods, one referred to as "vapor axial deposition" or "VAD", and the other as "modified chemical vapor deposition" or "MCVD". Both of these methods are well known and do not require detailed exposition. See, for instance, J.B. MacChesney et al., chapter 15 of "Materials Science and Technology", Vol. 9,
J. Zarzycki, editor, pp. 751-780, VCH Verlagsgesellschaft, Weinheim, Germany, incorporated herein by reference.

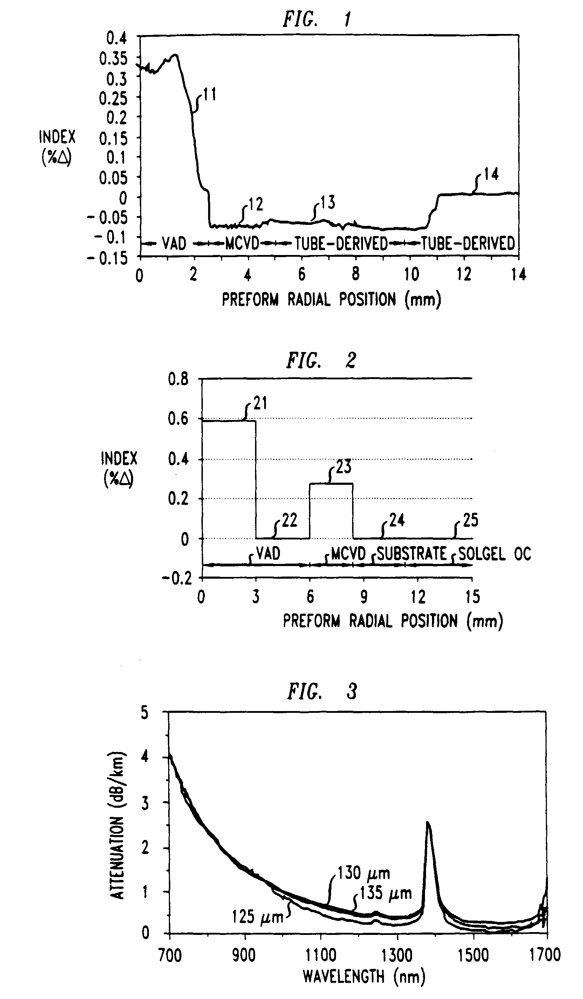

The two methods not only differ from each other with respect to their technical features but also with respect to their strengths and weaknesses. For instance, VAD can efficiently and rapidly produce large preforms that can yield up to about 1000 km of conventional or dispersion shifted single mode fiber. However, VAD is not well suited for production of preforms that have a complex refractive index profile, such as, for instance, a profile as shown in Fig. 2.

On the other hand, MCVD is capable of producing fibers that have complex refractive index profiles. Such profiles exemplarily comprise refractive index rings and/or trenches, disposed around the core, to manage dispersion as required for current high capacity (multi-channel) systems. However, glass deposition by conventional MCVD is relatively slow (e.g., 0.25gm SiO₂/minute for a conventional Ge-doped core material),and the collapse of the substrate tube with the deposited glass thereon is relatively slow and requires high temperature. Furthermore, conventional MCVD is limited with regard to the size of the core rod that can be produced, and MCVD-produced fiber generally has a (not intentionally produced) central refractive index "dip".

Optical fiber preforms capable of yielding hundreds of kilometers of standard (125µm diameter) single mode (SM) optical fiber have been produced by overcladding a conventional MCVD core rod with silica jacketing. Clearly, such a core rod has to be of sufficient diameter to provide the "light propagating" region of the eventual fiber. In many cases the core rod also must have a complex structure, including radially varying composition, to provide not only low loss but also, for instance, predetermined dispersion or non-linear effects to allow multiplexing of a multiplicity (e.g., 80) channels on an individual SM fiber.

It would be desirable to have available a method capable of making optical fiber having a light propagation region of relatively complex index profile, the method furthermore capable of producing a preform yielding 1200 km or more of SM fiber, and to achieve all this at a relatively low cost, advantageously at a per meter cost less than the per meter cost of analogous fiber with MCVD-produced light-propagating region. This application discloses such a method.

### SUMMARY OF THE INVENTION

The instant invention is embodied in a hybrid method of making an optical fiber comprising providing a preform having a VAD-produced core surrounded by a MCVD-produced region.

The novel hybrid method utilizes the ability of VAD to deposit silica-based material at a relatively high rate, and to rapidly form a core rod substantially without a central dip in refractive index. Exemplarily the method comprises use of a core rod that has a central region of maximum refractive index n_{c} surrounded by a (VAD-produced) inner cladding region having an effective refractive index n₁; which in turn is surrounded by MCVD-produced cladding. In another exemplary embodiment the method comprises use of a VAD-produced core rod having an a maximum refractive index n_{c} that is substantially constant in the radial direction and is surrounded by MCVD-produced material. In a still further embodiment the core region has a graded refractive index.

The novel hybrid method also utilizes the ability of MCVD to deposit silica-based material with a variety of dopants therein, as well as the ability to produce relatively complex refractive index profiles.

Our preliminary results indicate that the hybrid method is capable of producing optical fiber preforms that can yield 1200 km or more of optical fiber, and to manufacture the optical fiber preforms relatively rapidly, as compared to conventional MCVD. These and other process features are expected to result in significantly lowered manufacturing costs for fibers with a relatively complex refractive index profile. The method can be used to produce graded index fiber as well as step index fiber.

### BRIEF DESCRIPTION OF THE DRAWINGS

Fig. 1 shows the refractive index profile of an exemplary preform according to the invention;
Fig. 2 schematically shows the refractive index profile of another exemplary preform according to the invention;
Fig. 3 shows attenuation vs. wavelength of the fiber drawn from the preform of Fig. 1;
Fig. 4 shows an exemplary flow chart of a process of making fiber according to the invention; and
Fig. 5 schematically shows an exemplary single mode optical fiber according to the invention in cross section.

The drawings are not to scale or in proportion.

### DETAILED DESCRIPTION

FIG. 1 shows the measured refractive index profile of an exemplary optical fiber preform according to the invention. Numerals 11-14 designate, respectively, the VAD-produced up-doped core rod, the MCVD-produced down-doped inner cladding material, down-doped cladding material derived from pre-existing down-doped silica tubes, and cladding material derived from pre-existing undoped silica tubes. The latter material exemplarily is derived from sol-gel silica tubes of diameter sufficient to result in a preform of about 62mm diameter. As is conventional, the refractive index is specified in terms of the relative refractive index percentage difference (%Δ), which is defined as 100(n-nₒ)/nₒ, where n is the refractive index of a given region of the fiber (e.g., the core), and nₒ, is the refractive index of undoped fused silica. As can be seen from Fig. 1, the exemplary preform has core % Δ of about 0.3, MCVD cladding % Δ of about -0.08, substrate tube-derived cladding % Δ also of about -0.08, and tube-derived outer cladding % Δ of zero.

Fig. 2 schematically shows the refractive index profile of another exemplary optical fiber preform according to the invention. The VAD-produced material of the preform is doped core 21 and undoped inner cladding 22, the MCVD-produced material is updoped index ring 23, and tube-derived material is undoped outer cladding 24 and 25. Region 24 is provided by the substrate tube for MCVD, and region 25 exemplarily is provided by a sol/gel-produced glass tube.

Computer modeling has shown that the preform of Fig. 2 yields fiber having an effective core area A_{eff} = 55.4µm², a cut-off wavelength λ_{c} = 1.78µm; a positive dispersion D at 1.55µm of about 5.410ps/nm·km; a dispersion slope Dₛₗₒₚₑ at 1.55µm of about 0.051 ps/nm²·km, and a microbending loss of 0.56 dB/km for a bend radius of 16mm. The fiber thus has characteristics substantially corresponding to Lucent Technologies' Truewave® fiber, but differs from that prior art fiber with respect to the nature of the core region and the inner cladding region, with the prior art fiber having MCVD-produced core and inner cladding.

### EXAMPLE I

A 6mm diameter core rod, GeO₂ - doped to Δ ∼ 0.33%, was produced in conventional fashion by VAD and etching. On the inside wall of a commercially available F-doped (Δ∼ -0.08%) silica tube (inside diameter 22mm, outside diameter 28mm), F-doped silica (Δ∼ -0.08%) was deposited by conventional MCVD. Sixteen MCVD torch passes resulted in deposition of about 84.8mm²
F-doped silica inside the substrate tube. The tube with the MCVD-produced material thereon was then partially collapsed to an inner diameter sufficient to accept the VAD core rod. The core rod was then inserted into the partially collapsed substrate tube with the MCVD deposit thereon, and the rod was overclad in conventional fashion by collapse of the tube onto the rod. The overclad rod was then stretched from 21.07mm diameter to 16.72mm diameter, and then overclad with a further F-doped 22x28mm tube as described. The resulting rod was then overclad with a commercially available undoped tube (25mm inside diameter, 63mm outside diameter. The resulting preform had a diameter of about 61.6mm and a refractive index profile as shown in Fig. 1.

Fiber was drawn from the preform in conventional fashion. The fibers had diameter 125, 130 and 135µm, respectively. The loss spectrum of the fibers is shown in Fig. 3. OTDR measurements showed the average attenuation to be 0.415 dB/km and 0.261 dB/km for 1310nm and 1557nm wavelength, respectively.

Although attenuation of the exemplary fibers according to the invention was slightly higher than that of prior art production fiber, optimization of the method according to the invention is expected to result in fibers of improved attenuation, comparable to prior art production fiber. For instance, in an optimized process, great care will typically be taken to prevent contamination of the preform material within about 160µm of the VAD/MCVD interface. Exemplarily, this involves in-situ plasma etching of the VAD core rod and the inner surface of the MCVD tube. An optimized process typically will comprise a Cl₂ treatment of the VAD core rod and/or the MCVD tube prior to overcladding the former with the latter.

### EXAMPLE II

An optical fiber preform is produced as follows. A 12mm diameter GeO₂-doped VAD core rod, with effective refractive index Δ = 0.33%, is provided. A 4mm thick F-doped MCVD deposit (Δ = -0.08%) is formed on the inner wall of a down-doped (Δ = -0.08%) substrate tube having 20 x 26mm diameter. The tube is collapsed onto the core rod in conventional fashion. This is followed by collapsing a 26 x 32mm diameter down-doped overcladding tube (Δ = -0.08%) onto the rod. This in turn is followed by collapsing a 32 x 125mm diameter undoped silica overcladding tube onto the rod.

The thus produced preform includes a 200mm² cross section MCVD-produced annular region, deposited in a standard 110cm long tube. The MCVD-produced material totals 484gm of deposit. At a deposition rate of 1.2 gm/minute, deposition of the MCVD material requires about 440 minutes. High deposition rate MCVD is disclosed in co-assigned US patent application Serial No. 09/112,069, filed July 8, 1998 by P.F. Glodis et al. for "High Rate MCVD Method for Making an Optical Fiber Preform."

From the thus produced preform, about 1200km of 125µm diameter single mode optical fiber is drawn in conventional fashion.

It will be understood that the above described embodiments of the invention are exemplary only, and that the invention can be embodied in a variety of processes for making optical fiber. All these processes have in common that a VAD-produced glass rod that comprises an up-doped core region is surrounded by MCVD-produced glass, up-doped, down-doped, undoped or doped to have a complex refractive index. Since a VAD-produced core rod typically can be produced at a fraction of the production cost of a corresponding MCVD-produced core rod, substitution of a MCVD-produced core rod with a VAD-produced material will typically result in lower production cost. Thus, optical fiber according to the invention will generally have lower production cost than analogous prior art fiber wherein essentially all optically active material (core, inner cladding) is MCVD-produced silica-based glass.

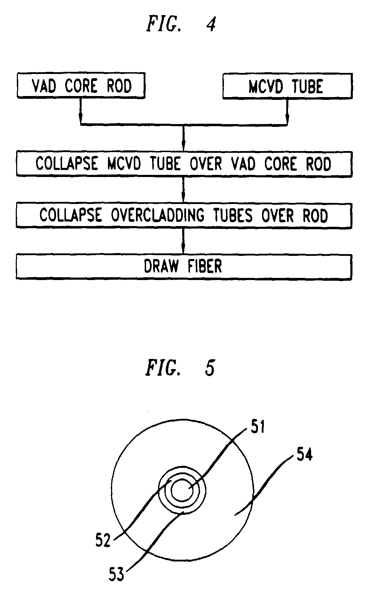

Fig. 4 schematically depicts the method according to the invention. A VAD core rod and a MCVD tube are provided, the tube is collapsed over the core rod, overcladding tubes are collapsed over the collapsed tube, and fiber is drawn from the thus produced preform.

Fig. 5 schematically depicts in cross section an exemplary single mode optical fiber according to the invention, wherein numerals 51-54 respectively designate the VAD-produced core, a VAD-produced inner cladding, a MCVD-produced region (e.g., a refractive index "ring"), and optically inactive tube-derived cladding. The VAD-produced core is substantially free of a central refractive index "dip", and the MCVD-produced refractive index ring typically exhibits refractive index "ripples" that are indicative of MCVD-produced material. Fig. 1 shows such ripples in MCVD-produced glass 12.

It will be appreciated that the disclosed refractive index profiles are illustrative examples only, and that preforms with a wide variety of index profiles can be produced according to the invention. For instance, the VAD-produced core region can have a graded refractive index, and the (also VAD-produced) inner cladding region can have a refractive index < nₒ. This inner cladding region is contactingly surrounded by an MCVD-produced index ring having refractive index > nₒ.

## Claims

1. Method of making a silica-based optical fiber comprising;
a) providing a silica-based core rod comprising a core region having a maximum refractive index n_{c};
b) surrounding said core rod with silica-based cladding material comprising a first cladding material having a refractive index n₁ < n_{c};
c) forming an optical fiber preform by a process that comprises collapsing the first cladding material onto the core rod; and
d) drawing the optical fiber from said optical fiber preform;
CHARACTERIZED INTHAT
e) the provided core rod is made by a vapor axial deposition method and is substantially free of a central index dip; and
f) the first cladding material is made by a modified chemical vapor deposition method comprising deposition of first cladding material in a silica-based substrate tube.

2. Method according to claim 1, wherein said core rod further comprises a second cladding material of refractive index n₂<n_{c}.

3. Method according to claim 2, wherein n₂ is substantially equal to n₀, where n₀ is the refractive index of vitreous silica.

4. Method according to claim 3, wherein n₁>n₂.

5. Method according to claim 1, wherein said core rod consists substantially of material having a refractive index substantially equal to n_{c}.

6. Method according to claim 5 wherein, after step c), said first cladding region contactingly surrounds said core.

7. Method according to claim 6, wherein n₁<n₀, where nₒ is the refractive index of vitreous silica.

8. Silica-based optical fiber comprising a core of maximum refractive index n_{c}, and further comprising a first cladding region of refractive index n₁ surrounding said core;
CHARACTERIZED IN THAT
a) said core comprises silica-based material formed by a vapor axial deposition method, said core being substantially free of a central refractive index dip; and
b) said first cladding region comprises silica-based material formed by a modified chemical vapor deposition method comprising deposition of first cladding material in a silica-based substrate tube.

9. Optical fiber according to claim 8, wherein said first cladding region contactingly surrounds said core.

10. Optical fiber according to claim 8, wherein said first cladding region is spaced from said core region.

11. Optical fiber according to claim 8, wherein said fiber is a single mode fiber.

12. Optical fiber according to claim 8, wherein said core has a graded refractive index.

13. Optical fiber according to claim 8, wherein said fiber is a step-index fiber.
